# EUROPEAN PATENT SPECIFICATION

(11) **EP 2 559 613 B1**
(45) Date of publication and mention of the grant of the patent: **12.11.2014**
(21) Application number: 11178199.3
(22) Date of filing: 19.08.2011
(51) Int. Cl.: B62K 23/06, B62M 25/04

(54) **Shifter**
Schalter
Sélecteur de vitesses

(43) Date of publication of application: 20.02.2013
(73) Proprietor: Lin, Chang Hui, Changhu (TW)
(72) Inventor: Lin, Chang Hui, Changhu (TW)
(74) Representative: Chaillot, Geneviève

(56) References cited:
- EP-A1- 1 705 110
- EP-A2- 1 927 541
- EP-A2- 2 357 127
- JP-A- 2002 302 090
- US-A1- 2002 104 401

## Description

### BACKGROUND OF THE INVENTION

### Field of the Invention

The present invention relates to a speed adjusting device, and more particularly to a speed adjusting device of a speed changer being used in a middle speed changer and a rear speed changer of a bicycle.

### Description of the Prior Art

A conventional ratchet speed changing mechanism contains a cable to change speed and an actuating lever, wherein the actuating lever is moved to actuate the ratchet speed changing mechanism to shift up and down. In operation, the ratchet speed changing mechanism is actuated by the actuating lever to shift a freewheel upward in one level. If desiring to shift the speed in multi-section level, the actuating lever is moved continuously without being moved in one level at one time.

The present invention has arisen to mitigate and/or obviate the afore-described disadvantages.

EP 2 357 127 A2 discloses a shifter as defined in the preamble of claim 1.

### SUMMARY OF THE INVENTION

The primary object of the present invention is to provide a shifter which is capable of overcoming the shortcomings of the conventional shifter.

Further object of the present invention is to provide a shifter that is capable of shifting up, shifting down, and shifting down in only one level at one time.

Another object of the present invention is to provide a shifter that if shifting up overly, the second lever is actuated to move backward in one level so that the speed changing mechanism rolls to release the cable, thus shifting down in one to three levels.

To obtain the above objectives, a speed adjusting device of a speed changer provided by the present invention contains:
a base including a first hole fixed on a central portion thereof to insert a first central spindle, and including a holder and a fitting member both of which extend from a front end of the base to connect with an adjusting loop, and the fitting member includes a ring member fitted thereon;
an adjusting loop including a plurality of first screw bores to lock a front cover and a second hole disposed on a central position thereof to receive the first ratchet, the first actuating lever, the ring member, and the , the second hole including a groove fixed at a suitable position of an outer side thereof;
a front cover including a first orifice formed on a central portion thereof to insert a first screw so that the returning spring is hooked with the first screw and is fixed in the rear speed changer such that the front cover, the adjusting loop, the holder are pressed on the rear speed changer.

The present invention relates to a shifter as defined in claim 1.

### BRIEF DESCRIPTION OF THE DRAWINGS

Fig. 1 is a perspective view showing the exploded components of a shifter according to a first embodiment of the present invention;
Fig. 2 is a perspective view showing the assembly of the shifter according to the first embodiment of the present invention;
Fig. 3 is a cross sectional view showing the assembly of the shifter according to the first embodiment of the present invention;
Fig. 4 is a plan view showing the assembly of a speed changing mechanism of the shifter according to the first embodiment of the present invention;
Fig. 5 is a front plan view showing the assembly of the shifter according to the first embodiment of the present invention;
Fig. 6 is a plan view showing the non-operation of the shifter according to the first embodiment of the present invention;
Fig. 7 is a plan view showing the operation of the shifter according to the first embodiment of the present invention;
Fig. 8 is another plan view showing the operation of the shifter according to the first embodiment of the present invention;
Fig. 9 is another plan view showing the operation of the shifter according to the first embodiment of the present invention;
Fig. 10 is a perspective view showing the exploded components of a ratchet speed changing mechanism of a shifter according to a second embodiment not forming part of the present invention;
Fig. 11 is a perspective view showing the assembly of the ratchet speed changing mechanism of the shifter according to the second embodiment not forming part of the present invention;
Fig. 12 is a cross sectional view showing the assembly of the ratchet speed changing mechanism of the shifter according to the second embodiment not forming part of the present invention;
Fig. 13 is another cross sectional view showing the assembly of the ratchet speed changing mechanism of the shifter according to the second embodiment not forming part of the present invention.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

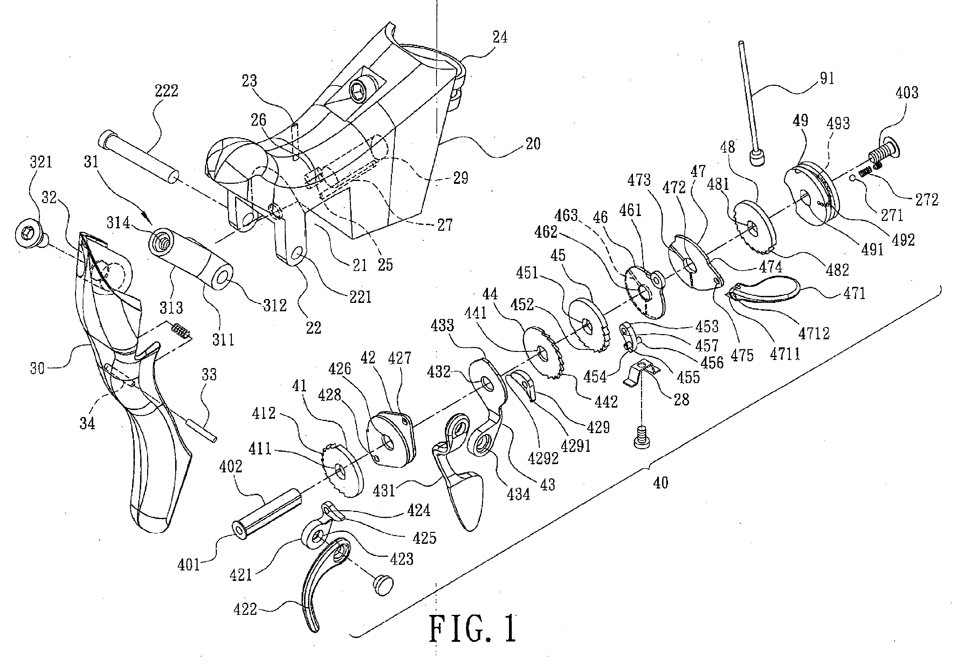

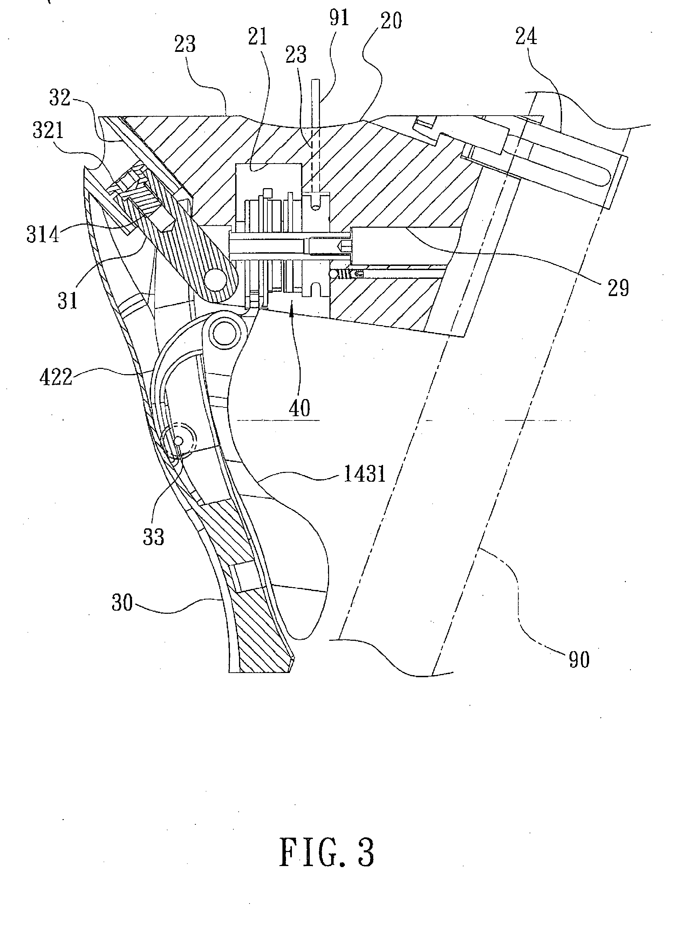

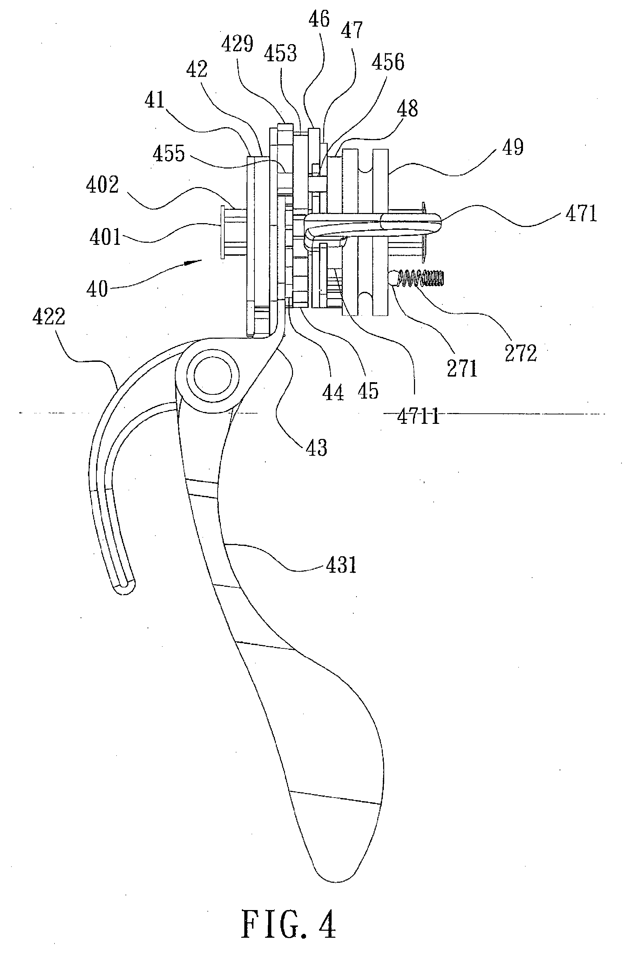

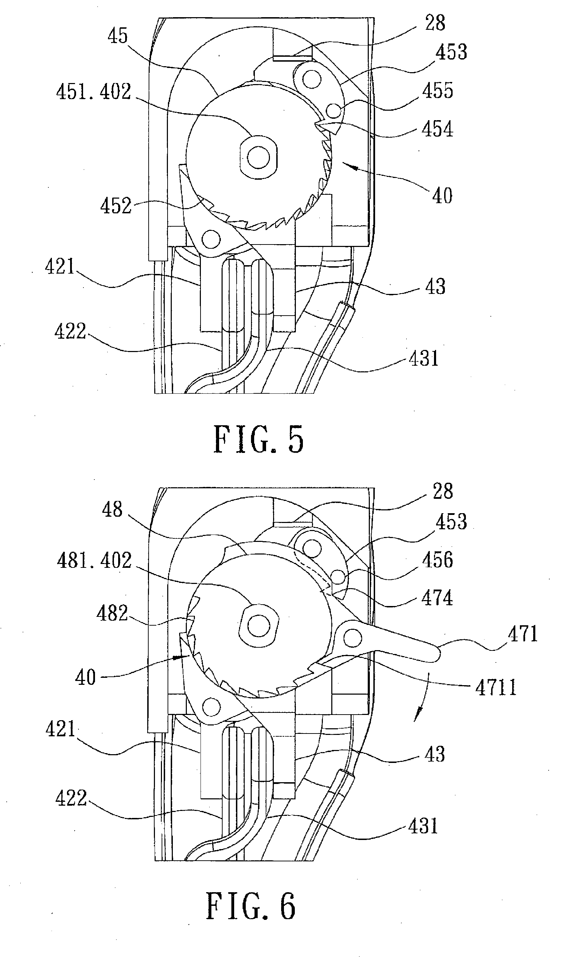

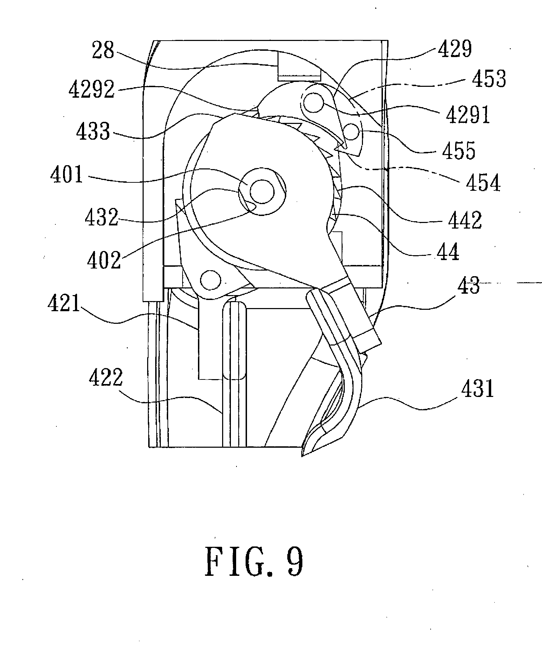

Referring to Figs. 1-9, a shifter in accordance with a preferred embodiment of the present invention is fixed on a handle 90 of a bicycle and connected with a rear speed changer of a cable 91 and comprises: a body 20, a first bar 30, and a speed changing mechanism 40, the body 20 including the first bar 30 axially coupled with a side thereof, a chamber 21 formed on a bottom end thereof to receive the speed changing mechanism 40, and two tabs 22 disposed on two sides of the bottom end thereof respectively, and each tab 22 including a first hole 221, and the body 20 including a first aperture 23 arranged on a top end thereof and communicating with the chamber 21 to insert the cable 91 into the chamber 21 via the first aperture 23 so as to connect with a first seat 49, the body 20 including a first retaining ring 24 secured on one side thereof to position the body 20 on the handle 90, the chamber 21 including a first positioning pillar 25, an axial shaft 26, a second aperture 27, and a first returning spring 28, all of which are disposed on an inner wall of the chamber 21, the first positioning pillar 25 being provided to fix a first fixing piece 46 in the chamber 21, and the axial shaft 26 being used to axially position a first hook 453 in the chamber 21. The second aperture 27 includes a first ball 271 and a first spring 272, both of which are retained in a first groove 493 of the first seat 49 so that when the first seat 49 rolls or releases the cable 91, a sound is made. The body 20 includes two second holes 29 disposed on two sides thereof individually and communicating with the chamber 21 to insert a first spindle 401 so that the speed changing mechanism 40 is fixed in the chamber 21. Between the two tabs 22 is axially secured a Tee rotary stem 31, and the rotary stem 31 includes a lateral peg 311 disposed on an upper side thereof, and the lateral peg 311 includes two third holes 312 formed on two sides thereof respectively, an extension 313 and a first opening 314, both of which are disposed on a front side of the lateral peg 311, wherein a first screw 222 is inserted into the first hole 221 of the tab 22 and the third hole 312 of the rotary stem 31, and the rotary stem 31 is axially fixed between the tabs 22, the first bar 30 includes a second opening 32 fixed on a top end thereof and a third opening 34 secured on a middle section thereof, a second screw 321 is inserted through the second opening 32 to be locked on the first opening 314 of the extension 313 of the rotary stem 31 so that the first bar 30 is axially coupled with the extension 313 of the rotary stem 31, such that the first bar 30 is moved inward and upward, wherein the first bar 30 includes a first lever 422 arranged therein and a pin 33 inserted into the third opening 34 to position the first lever 422 so that the first bar 30 is moved inward to brake the bicycle or is moved upward to move the first lever 422, shifting down the bicycle.

The speed changing mechanism 40 is comprised of the first spindle 401, the third screw 403, a first tooth member 41, a first post 421, a first holder 42, a second holder 43, a second lever 431, an actuating member 429, a second tooth member 44, a third tooth member 45, the first hook 453, the first fixing piece 46, a defining member 47, a third lever 471, a fourth tooth member 48, and the first seat 49; the first spindle 401 is inserted through the first tooth member 41, the first holder 42, the second holder 43, the second tooth member 44, the third tooth member 45, the first fixing piece 46, and the first seat 49 to be further locked by the third screw 403, wherein the first tooth member 41 includes an oval first bore 411 disposed on a central portion thereof, the second tooth member 44 includes an oval second bore 441, the third tooth member 45 includes an oval third bore 451 fixed on a central portion thereof, the fourth tooth member 48 includes an oval fourth bore 481 formed on a central position thereof, and the first seat 49 includes an oval fifth bore 491 arranged on a central position thereof, the first spindle 401 includes an oval first column 402, wherein as the first spindle 401 is actuated to rotate by using the third lever 471 and the first lever 422, the first tooth member 41, the second tooth member 44, the third tooth member 45, the fourth tooth member 48, and the first seat 49 are rolled or released simultaneously, and then the cable 91 is rolled or released by the first seat 49 to shift upward or downward in a multi-section shifting manner. It is to be noted that the longer the travel is rolled and released, the more the shifting level is changed.

After the speed changing mechanism 40 is connected together, the first positioning pillar 25 is inserted into a fourth opening 461 of the first fixing piece 46 so that the speed changing mechanism 40 is fixed in the chamber 21, wherein the second bore 411 of the first tooth member 41 includes a first ratchet 412 arranged around an outer periphery thereof, the first post 421 includes a fifth opening 423 formed thereon to retain with the first lever 422, and the first post 421 includes a sixth opening 424 disposed on a top end thereof and a first pulling portion 425 fixed on a side thereof, the sixth opening 424 is used to axially position the first post 421 in a seventh opening 428 which is located at a bottom end of the first holder 42, the first holder 42 includes a first orifice 426 fixed on a central position thereof, a second orifice 427 secured on a top end thereof, and a third orifice 428 formed on a bottom end thereof, and the third orifice 428 includes the sixth opening 424, the second orifice 427 is applied to receive the actuating member 429, the actuating member 429 includes a fourth orifice 4291 disposed on a middle section thereof and a stop portion 4292 fixed on a front side thereof, and when the actuating member 429 is not operated, it is pushed by a first projection 433 of the second holder 43, and the second holder 43 includes a fifth orifice 432 formed on a central position thereof, the first projection 433 arranged on a top end thereof, and a sixth orifice 434 secured on a bottom end thereof to insert the second lever 431, the second tooth member 44 includes an oval sixth bore 441 disposed on a central position thereof and having a second ratchet 442 fixed around an outer periphery thereof, the first hook 453 includes a first fastening tail 454 formed on a bottom end thereof, a second and a third posts 455, 456 arranged on two sides thereof individually, and a seventh orifice 457 formed on a top end thereof to retain with the axial shaft 26, wherein the first hook 453 is pressed by the first returning spring 28 to be retained with the third tooth member 45 so that the speed changing mechanism 40 is fixed. The third bore 451 of the third tooth member 45 includes a third ratchet 452 disposed on an outer periphery thereof, and the first fixing piece 46 includes an eighth opening 462 fixed on a central position thereof, a sector slot 463 secured on a peripheral side thereof, and the fourth opening 461 secured on a top end thereof to insert the first positioning pillar 25, the defining member 47 includes a ninth opening 472 secured on a central position thereof, a fan-shaped second projection 473 formed on a side thereof, and a recess 474 arranged on a peripheral side of an upper end thereof, the recess 474 includes a first port 475 secured on a peripheral side thereof to insert the third lever 471, and the third lever 471 includes a first pushing portion 4711 and a second port 4712, both of which are disposed on a front side of the third lever 471, the second port 4712 is screwed with a fourth screw to connect the defining member 47 with the third lever 471, the fourth tooth member 48 includes the fourth bore 481 formed on the central position thereof, a fourth ratchet 482 fixed on an outer periphery thereof, the first seat 49 includes the oval fifth bore 491 arranged on the central position thereof, a second groove 492 formed on an outer side thereof to receive the cable 91, and a number of the first grooves 493 arranged on a side surface thereof to match with the first ball 271 and the first spring 272 so that when the first hook 453 is released, the speed changing mechanism 40 rolls to make sound and position.

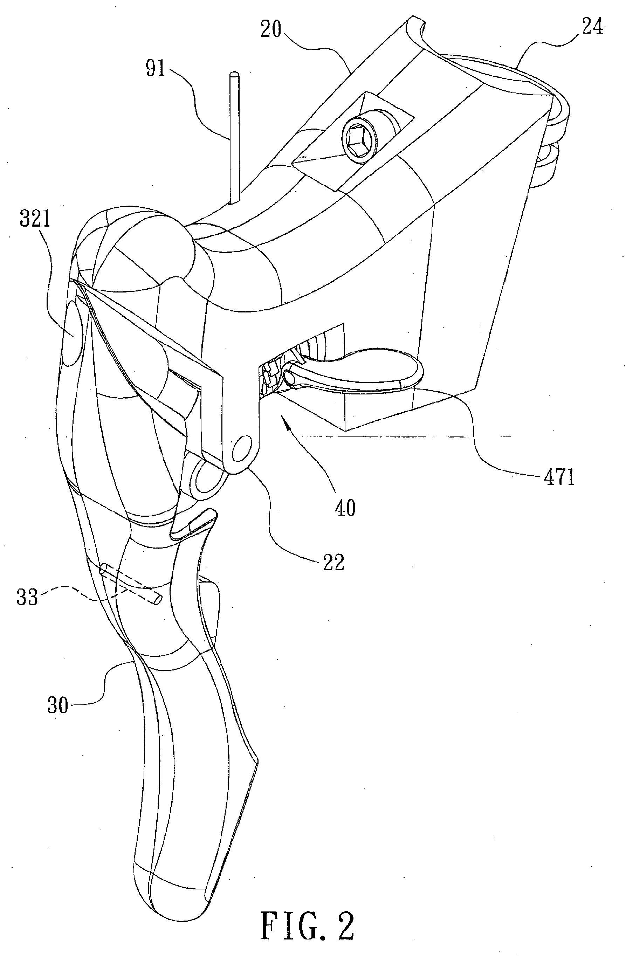

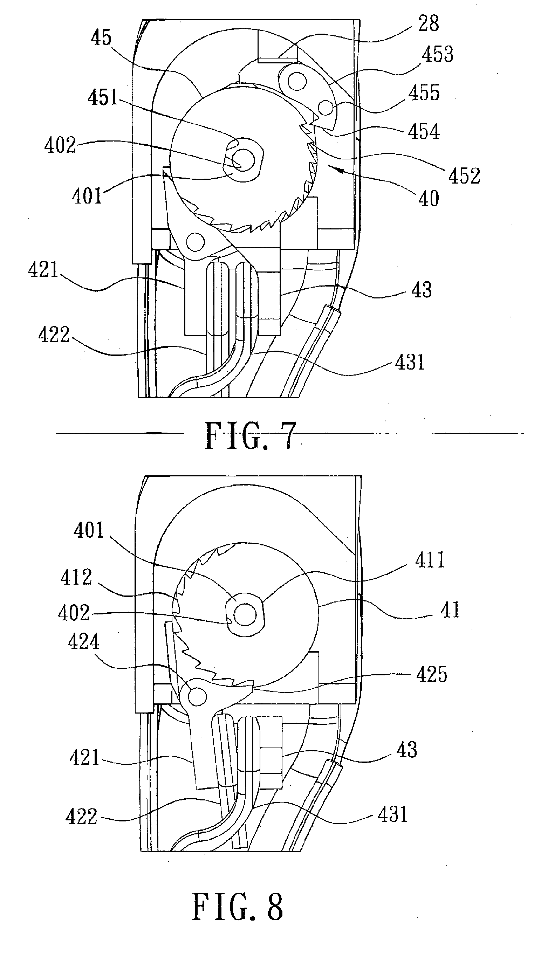

Referring to Figs. 2-9, when the speed changing mechanism 40 is not operated, the first fastening tail 454 of the first hook 453 retains with the third ratchet 452 of the third tooth member 45, and the first hook 453 is pressed by the first returning spring 28 to stop the third tooth member 45 rotating in a clockwise direction so that the speed changing mechanism 40 is in a still state. When the third lever 471 is actuated, the defining member 47 is rolled so that the recess 474 lifts the third post 456 of the first hook 453 as shown in Figs. 1 and 7, such that the first hook 453 is rotated, and the first fastening tail 454 disengages from the third ratchet 452 of the third tooth member 45. Referring to Figs. 1-6, the first pushing portion 4711 of the third lever 471 pushes the fourth tooth member 48 to roll in a clockwise direction so that the first tooth member 41, the second tooth member 44, the third tooth member 45, the fourth tooth member 48, the first bore 411, the second bore 441, the third bore 451, the fourth bore 481, and the fifth bore 491 of the first seat 49 are rolled in the clockwise direction with the first column 402 of the first spindle 401, and the first seat 49 rolls in the clockwise direction as well to pull the cable 91 to move toward the rear speed changer so that the rear speed changer moves to accelerate speed among a first, a second, and a third levels. When the third lever 471 returns back to an original position, the defining member 47 is rolled to disengage from the second projection 473 so as to be further retained in the sector slot 463, such that the defining member 47 stops rolling so that the first hook 453 is pressed by the first returning spring 28, and the first fastening tail 454 hooks the third ratchet 452 of the third tooth member 45 to return back to the original position, hence the third tooth member 45 can not roll so that the speed changing mechanism 40 returns the still state.

When the first bar 30 is moved upward, the first lever 422 is actuated so that the first post 421 rotates along the sixth opening 424, and the first pulling portion 425 of the first post 421 pulls the first tooth member 41 to roll in an anti-clockwise direction, thereafter the second tooth member 44, the third tooth member 45, the fourth tooth member 48, and the first seat 49 are actuated to roll in the anti-clockwise direction with the first column 402 of the first spindle 401 so that the cable 91 is pulled toward the rear speed changer, then the rear speed changer decelerates speed among the first, the second and the third levels. When the third tooth member 45 stops rolling, the first fastening tail 454 of the first hook 453 engages with the third ratchet 452 along the third ratchet 452 of the third tooth member 45, and when the first lever 422 moves back to the original position, the first fastening tail 454 of the first hook 453 hooks the third ratchet 452 of the third tooth member 45 again so that the third tooth member 45 can not rotate, hence the speed changing mechanism 40 returns the still state.

When the second lever 431 is moved, the second holder 43 rotates along the first spindle 401 in the anti-clockwise direction so that the actuating member 429 is pressed by the first returning spring 28 to rotate along the fourth orifice 4291, such that the second posts 455 is lifted to further lift the first hook 453 as illustrated in Figs. 1, 4, and 7 so that the first fastening tail 454 of the first hook 453 releases the third ratchet 452 of the third tooth member 45, and then the actuating member 429 is pressed by the first returning spring 28, the stop portion 4292 of the actuating member 429 retains with the first lever 442 of the second tooth member 44 so that as the second tooth member 44 rolls, only one first lever 442 is released, thereby the first column 402 of the first spindle 401 rolls in a smaller distance, and the cable 91 is pulled by the first seat 49 to couple with the rear speed changer so that the rear speed changer displaces to actuate the first lever 422 to move backward in only one level.

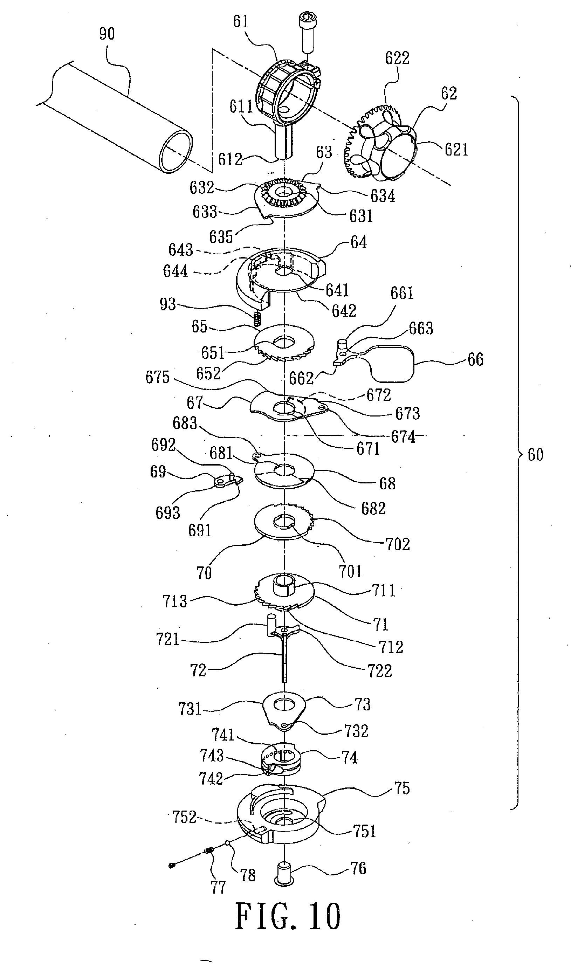

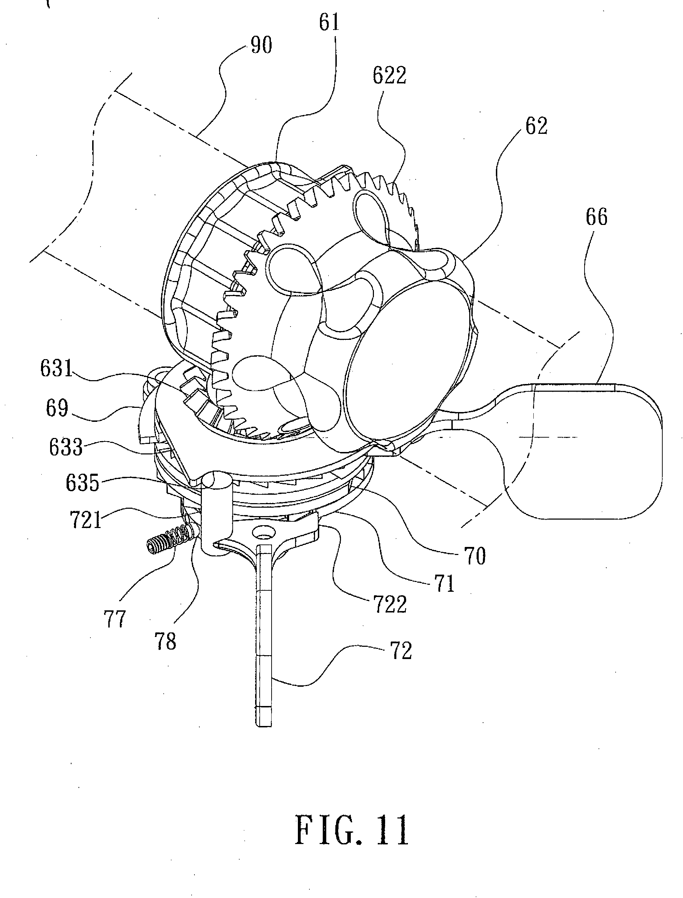

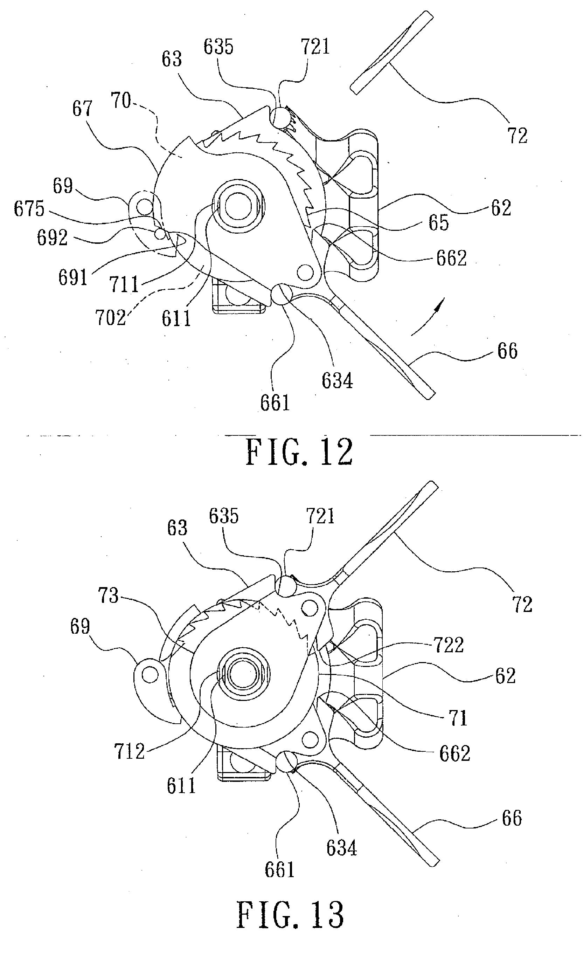

The second embodiment as shown in Figs. 10-13 does not form part of the invention but represents background art that is useful for understanding the invention.

With reference to Figs. 10-13, a ratchet speed changing mechanism 60 of a shifter is comprised of a second retaining ring 61, a rotary grip 62, a first bevel gear 63, a first housing 64, a fifth tooth member 65, a fifth lever 66, a second fixing piece 67, a limiting member 68, a second hook 69, a sixth tooth member 70, a seventh tooth member 71, a sixth lever 72, a third holder 73, a second seat 74, and a second housing 75. The second retaining ring 61 includes a second spindle 611 inserted through the first bevel gear 63, the first housing 64, the fifth tooth member 65, the second fixing piece 67, the limiting member 68, the sixth tooth member 70, the seventh tooth member 71, the third holder 73, the second seat 74, and the second housing 75 to lock with a fifth screw 76, wherein the first housing 64 and the second housing 75 includes an oval seventh bore 641 and an oval eighth bore 751 disposed on central positions thereof respectively to position the first housing 64 and the second housing 75 by matching with an oval second column 612 of the second spindle 611, and the fifth tooth member 65 and the sixth tooth member 70 includes an oval ninth bore and an oval tenth bore fixed on central positions thereof individually to fit with an oval fourth post 711 of the seventh tooth member 71, the second seat 74 includes an oval eleventh bore 741 secured on a central position thereof to fit with an oval fourth post 712 of the seventh tooth member 71 so as to rotate the rotary grip or so that when the fifth lever is moved, the fifth tooth member 65, the sixth tooth member 70, the seventh tooth member 71, and the second seat 74 roll simultaneously, and the second seat 74 includes the cable 91 connected with the rear speed changer so that when the second seat 74 is rolled or the cable 91 is released, the shifting level is moved to accelerate or decelerate speed of the bicycle, wherein the rolling distance and the releasing travel are directly proportional to the shifting level.

The rotary grip 62 includes a tenth opening 621 formed on a central position thereof and a second bevel gear 622 arranged on a front side thereof to insert the handle 90 so that the second bevel gear 622 engages with teeth 632 of the first bevel gear 63, and the second retaining ring 61 is locked on the handle 90. The second retaining ring 61 includes the second spindle 611 inserted through the first bevel gear 63, the first housing 64, the fifth tooth member 65, the second fixing piece 67, the limiting member 68, the sixth tooth member 70, the seventh tooth member 71, the third holder 73, the second seat 74, and the second housing 75 so as to lock with the fifth screw 76. The first bevel gear 63 includes a fourth hole 631 and the teeth 632 disposed on a central position thereof, and the teeth 632 includes a thrust panel 633 disposed on a bottom end thereof, the thrust panel 633 includes two first notches 634, 635 fixed on two sides thereof respectively to push a first actuated shank 611 and a second actuated shank 721 of the fifth lever 66 and the sixth lever 72 respectively, and the first housing 64 includes the oval seventh bore 641 disposed on the central position thereof and a cavity 642 secured on a bottom end thereof to receive the fifth lever 66, the fifth tooth member 65, the second fixing piece 67, the limiting member 68, the second hook 69, the sixth tooth member 70, the seventh tooth member 71, the third holder 73, the sixth lever 72, and the second seat 74. The cavity 642 includes a fifth hole 643 and a second positioning pillar 25 arranged on a top end thereof, wherein the fifth hole 643 is used to lock the limiting member 68, and the second hook 69 includes a second returning spring 93 disposed on a peripheral side thereof, the fifth tooth member 65 includes an oval twelfth bore 651 fixed on a central position thereof and a fifth ratchet 652 secured on an outer side thereof. The second fixing piece 67 includes an eighth orifice 671 formed on a central position thereof, a fan-shaped third projection 672 arranged on a bottom end thereof, and a dent 673 disposed on an upper end thereof, and the dent 673 includes a first mouth 674 retained with the fifth lever 66 and an abutting block 675, the fifth lever 66 includes a second pushing portion 662 disposed on a front side thereof, a third actuated shank 661 fixed on another side thereof, and a second mouth 663 secured on a central position thereof. The limiting member 68 includes a third mouth 681 attached on a central position thereof, a fan-shaped fourth projection 682 formed on a peripheral side thereof, and an intake 683 arranged on an outer side thereof to lock the limiting member 68 in the cavity 642. The second hook 69 includes a second fastening tail 691 disposed on a front side thereof, a fifth post 692 fixed on a peripheral side of the second fastening tail 691 and retained in the dent 673, and a fourth mouth 693 secured on a top end thereof to axially position the second hook 69 on a second bar 644 of the cavity 642 of the first housing 64, and while the second fastening tail 691 of the second hook 69 is pressed by the second returning spring 93, the ratchet speed changing mechanism 60 is not rolled but be fixed, the sixth tooth member 70 includes an oval thirteenth bore 701 disposed on a central position thereof and a sixth ratchet 702 fixed on an outer side thereof, the seventh tooth member 71 includes the oval fourth post 711 extending from a central position of a top end thereof, the oval fourth post 712 formed on a central position of a bottom end thereof, a seventh ratchet 713 secured on an outer side thereof, and the oval fourth post 711 is inserted through the fifth tooth member 65, the second fixing piece 67, the limiting member 68, and the sixth tooth member 70, the fourth post 712 is inserted through the third holder 73 and the second seat 74. The sixth lever 72 includes a second pulling portion 722 disposed on a front side thereof, the second actuated shank 721 fixed on another side thereof, an eleventh opening 723 secured on a middle section thereof. The third holder 73 includes a ninth orifice 731 formed on a central position thereof and a tenth orifice 732 arranged on an outer side thereof to position the sixth lever 72. The second seat 74 includes an oval fourteenth bore 741 disposed on a central position thereof, a second notch 742 fixed on an outer side thereof to receive the cable 91, and a plurality of third grooves 743 secured on a peripheral side thereof to cooperate with a second ball 78 and a second spring 77 of a third aperture 752, such that when the second hook 69 is released from the positioning, the ratchet speed changing mechanism 60 makes sounds during rolling. The second housing 75 includes an oval fifteenth bore 751 disposed on a central position thereof and the third aperture 752 and a third returning spring 753, both of which are secured on a peripheral side of the second housing 75, wherein the third aperture 752 is used to receive the second ball 78 and the second spring 77 so that the second ball 78 and the second spring 77 contact with the third groove 743 of the second seat 74.

When the rotary grip 62 is rotated in the clockwise direction, the first bevel gear 63 rotates along the second spindle 611, and the first notch 634 actuates the third actuated shank 661 of the fifth lever 66. On the contrary, when the fifth lever 66 is actuated, the rotary grip 62 is not rotated so that the abutting block 675 of the second fixing piece 67 pushes the fifth post 692 of the second hook 69, and then the second fastening tail 691 disengages from the sixth ratchet 702 of the sixth tooth member 70, thus releasing the positioning. In addition, the third actuated shank 661 of the fifth lever 66 is actuated to rotate in the clockwise direction so that the second pushing portion 662 of the fifth lever 66 pushes the fifth tooth member 65 to rotate in the clockwise direction. Thereafter, the sixth tooth member 70, the seventh tooth member 71, and the second seat 74 roll simultaneously, and then the cable 91 is pulled to connect with the rear speed changer so that the rear speed changer displaces to accelerate speed among a first, a second, and a third levels. When the fifth lever 66 returns an original position, the second fixing piece 67 disengages from the fan-shaped fourth projection 682 of the limiting member 68, and the fan-shaped third projection 672 of the second fixing piece 67 engages with the fan-shaped fourth projection 682 of the limiting member 68 so that the second fixing piece 67 stops rolling, hence the second hook 69 is pressed by the second returning spring 93 so that the second fastening tail 691 hooks the sixth ratchet 702 of the sixth tooth member 70, hence the sixth tooth member 70 will not rotate so that the ratchet speed changing mechanism 60 returns a still state.

When the rotary grip 62 is rotated in the anti-clockwise direction, the first bevel gear 63 rotates along the second spindle 611 in the anti-clockwise direction, and then the first notches 634 actuates the second actuated shank 721 of the sixth lever 72. On the contrary, when the sixth lever 72 is actuated, the rotary grip 62 does not rotate, and when the sixth lever 72 is moved, the second actuated shank 721 of the sixth lever 72 rotates in the anti-clockwise direction so that the second pulling portion 722 of the sixth lever 72 pulls the seventh tooth member 71 to rotate in the anticlockwise direction.

Thereafter, the sixth tooth member 70, the fifth tooth member 65, and the second seat 74 roll in the anti-clockwise direction to pull the cable 91 so that the cable 91 couples with the rear speed changer, such that the rear speed changer displaces to decelerate speed among the first, the second, and the third levels. When the handle 90 stops rolling in the anti-clockwise direction, the second fastening tail 691 of the second hook 69 engages with the sixth ratchet 702 of the sixth tooth member 70, wherein when the sixth lever 72 returns the original position, the second fastening tail 691 of the second hook 69 hooks the sixth ratchet 702 of the sixth tooth member 70 so that the sixth tooth member 70 can not be rotated, thereby the ratchet speed changing mechanism 60 returns a still state.

## Claims

1. A shifter adapted to be fixed on a handle (90) of a bicycle and adapted to be connected with a rear speed changer by means of a cable (91) and comprising:
a body (20), a first bar (30), and a speed changing mechanism (40), the body (20) including a side axially coupled with the first bar (30), a chamber (21) formed on a bottom end thereof to receive the speed changing mechanism (40), and **characterized by** two tabs (22) disposed on two sides of the bottom end thereof respectively, and each tab (22) including a first hole (221), and wherein
the body (20) comprises a first aperture (23) arranged on a top end thereof and communicating with the chamber (21) to insert the cable (91) into the chamber (21) via the first aperture (23) so as to connect with a first seat (49), a first retaining ring (24) secured on one side thereof to position the body (20) on the handle (90), the chamber (21) includes a first positioning pillar (25), an axial shaft (26), a second aperture (27), and a first returning spring (28), all of which are disposed on an inner wall of the chamber (21), the first positioning pillar (25) being provided to fix a first fixing piece (46) in the chamber (21), and the axial shaft (26) being used to axially position a first hook (453) in the chamber (21);
wherein the second aperture (27) includes a first ball (271) and a first spring (272) and the first seat (49) includes a number of first grooves (493) arranged on a side surface thereof to match with the first ball (271) and the first spring (272), so that when the first seat (49) rolls or releases the cable (91), a sound is made, the body (20) also comprises two second holes (29) disposed on two sides thereof individually and communicating with the chamber (21) to insert a first spindle (401) so that the speed changing mechanism (40) is fixed in the chamber (21); between the two tabs (22) is axially secured a Tee rotary stem (31), and the rotary stem (31) includes a lateral peg (311) disposed on an upper side thereof, and the lateral peg (311) includes two third holes (312) formed on two sides thereof respectively, an extension (313) and a first opening (314), both of which are disposed on a front side of the lateral peg (311), wherein a first screw (222) is inserted into the first hole (221) of the tab (22) and the third hole (312) of the rotary stem (31), and the rotary stem (31) is axially fixed between the tabs (22);
the first bar (30) comprises a second opening (32) fixed on a top end thereof and a third opening (34) secured on a middle section thereof, a second screw (321) is inserted through the second opening (32) to be locked on the first opening (314) of the extension (313) of the rotary stem (31) so that the first bar (30) and the extension (313) of the rotary stem (31) are axially coupled , such that the first bar (30) is moved inward and upward wherein the first bar (30) includes
a first lever (422) arranged in the first bar (30), and the first bar (30) also comprises a pin (33) inserted into the third opening (34) to position the first lever (422) so that the first bar is moved in ward to brake the bicycle or is moved upward to move the first lever (422), shifting down the bicycle;
the speed changing mechanism (40) comprises the first spindle (401), a third screw (403), a first tooth member (41), a first post (421), a first holder (42), the first lever (422), a second holder (43), a second lever (431), an actuating member (429), a second tooth member (44), a third tooth member (45), the first hook (453), the first fixing piece (46), a defining member (47), a third lever (471), a fourth tooth member (48), and the first seat (49);
the first tooth member (41) includes an oval first bore (411) disposed on a central portion thereof, the second tooth member (44) includes an oval second bore (441), the third tooth member (45) includes an oval third bore (451) fixed on a central portion thereof, the fourth tooth member (48) includes an oval fourth bore (481) formed on a central position thereof, and the first seat (49) includes an oval fifth bore (491) arranged on a central position thereof, the first spindle (401) includes an oval first column (402), wherein as the first spindle (401) is actuated to rotate by using the third lever (471) and the first lever (422), the first tooth member (41), the second tooth member (44), the third tooth member (45), the fourth tooth member (48), and the first seat (49) are rolled or released simultaneously, and then the cable (91) is rolled or released by the first seat (49) to shift upward or downward in a multi-section shifting manner;
the first hook (453) is pressed by the first returning spring (28) to be retained with the third tooth member (45) so that the speed changing mechanism (40) is fixed.

2. The shifter as claimed in claim 1, wherein when the third lever (471) is actuated, the defining member (47) is rolled so that a recess (474) lifts the third post of the first hook (453), such that the first hook (453) is rotated, and a first fastening tail (454) disengages from a third ratchet (452) of the third tooth member (45); a first pushing portion (4711) of the third lever (471) pushes the fourth tooth member (48) to roll in a clockwise direction so that the first tooth member (41), the second tooth member (44), the third tooth member (45), the fourth tooth member (48), the first bore (411), the second bore (441), the third bore (451), the fourth bore (481), and the fifth bore (491) of the first seat (49) are rolled in the clockwise direction with the first column (402) of the first spindle (401), and the first seat (49) rolls in the clockwise direction as well to pull the cable (91) to move toward the rear speed changer so that the rear speed changer moves to accelerate speed among a first, a second, and a third level.

3. The shifter as claimed in claim 1, wherein when the second lever (431) is moved, the second holder (43) rotates along the first spindle (401) in the anti-clockwise direction so that the actuating member (429) is pressed by the first returning spring (28) to rotate along a fourth orifice (4291), such that a second post (455) is lifted to further lift the first hook (453) so that a first fastening tail (454) of the first hook (453) releases a third ratchet (452) of the third tooth member (45), and then the actuating member (429) is pressed by the first returning spring (28), a stop portion (4292) of the actuating member (429) retains with the first lever (422) of the second tooth member (44) so that as the second tooth member (44) rolls, only one first lever (422) is released, thereby the first column (402) of the first spindle (401) rolls in a smaller distance, and the cable (91) is pulled by the first seat (49) to couple with the rear speed changer so that the rear speed changer displaces to actuate the first lever (422) to move backward in only one level.

4. The shifter as claimed in claim 1, wherein the first fixing piece (46) includes a sector slot (463) of the first groove (493) so that when the first positioning pillar (25) is released, the speed changing mechanism (40) rolls to make sound.

5. The shifter as claimed in claim 1, wherein when the second lever (431) is moved, the second holder (43) rotates along the first spindle (401) in the anti-clockwise direction so that the actuating member (429) is pressed by the first returning spring (28) to rotate along a fourth orifice (4291), such that a second post (455) is lifted to further lift the first hook (453) so that a first fastening tail (454) of the first hook (453) releases a third ratchet (452) of the third tooth member (45), and then the actuating member (429) is pressed by the first returning spring (28), a stop portion (4292) of the actuating member (429) retains with the first lever (422) of the second tooth member (44) so that as the second tooth member (44) rolls, only one first lever (422) is released, thereby the first column (402) of the first spindle (401) rolls in a smaller distance, and the cable (91) is pulled by the first seat (49) to couple with the rear speed changer so that the rear speed changer displaces to actuate the first lever (422) to move backward in only one level.

## Patentansprüche

1. Schalthebel geeignet zur Befestigung an einem Lenker (90) eines Fahrrads und geeignet zum Verbinden mit einem hinteren Schaltwerk mit einem Seil (91) und umfassend:
ein Gehäuse (20), eine erste Stange (30), und einen Schaltmechanismus (40), das Gehäuse (20) enthaltend eine axial mit der ersten Stange (30) gekuppelte Seite, eine an einem unteren Ende hiervon ausgebildete Kammer (21), um den Schaltmechanismus (40) aufzunehmen, und durch zwei Laschen (22) gekennzeichnet, die an zwei Seiten des jeweils unteren Endes hiervon angeordnet sind, und jede Lasche (22) enthaltend ein erstes Loch (221), und wobei
das Gehäuse (20) eine erste Öffnung (23), die an einem oberen Ende hiervon angeordnet ist und mit der Kammer (21) verbunden ist, um das Seil (91) in die Kammer (21) über die erste Öffnung (23) einzuführen, um mit einer ersten Aufnahme (49) zu verbinden, einen ersten Haltering (24), der an einer Seite hiervon befestigt ist, um das Gehäuse (20) am Lenker (90) zu positionieren, umfasst, die Kammer (21) eine erste Positionierstütze (25), eine axiale Welle (26), eine zweite Öffnung (27) und eine erste Rückholfeder (28) enthält, die alle an einer Innenwand der Kammer (21) angeordnet sind, wobei die erste Positionierstütze (25) bereitgestellt wird, um ein erstes Befestigungsteil (46) in der Kammer (21) zu befestigen, und die axiale Welle (26) zum axialen Positionieren eines ersten Hakens (453) in der Kammer (21) verwendet wird;
wobei die zweite Öffnung (27) eine erste Kugel (271) und eine erste Feder (272) enthält und die erste Aufnahme (49) eine Anzahl von ersten Nuten (493) enthält, die an einer Seitenfläche hiervon angeordnet sind, um mit der ersten Kugel (271) und der ersten Feder (272) zusammenzupassen, so dass, wenn die erste Aufnahme (49) das Seil (91) aufrollt oder freigibt, ein Geräusch ertönt, das Gehäuse (20) ebenfalls zwei zweite Löcher (29) umfasst, die an zweiten Seiten hiervon einzeln angeordnet sind und mit der Kammer (21) verbunden sind, um eine erste Spindel (401) einzuführen, so dass der Schaltmechanismus (40) in der Kammer (21) befestigt ist; zwischen den beiden Laschen (22) axial eine T-Drehstange (31) befestigt ist, und die Drehstange (31) einen seitlichen Zapfen (311) enthält, der an einer oberen Seite hiervon angeordnet ist, und der seitliche Zapfen (311) zwei dritte Löcher (312), die an zwei Seiten hiervon jeweils ausgebildet sind, eine Verlängerung (313) und eine erste Öffnung (314), von denen beide an einer Vorderseite des seitlichen Zapfens (311) angeordnet sind, enthält, wobei eine erste Schraube (222) in das erste Loch (221) der Lasche (22) und das dritte Loch (312) der Drehstange (31) eingeführt wird, und die Drehstange (31) axial zwischen den Laschen (22) befestigt ist;
die erste Stange (30) eine zweite Öffnung (32), die an einem oberen Ende hiervon befestigt ist, und eine dritte Öffnung (34), die an einem mittleren Abschnitt hiervon befestigt ist, umfasst, eine zweite Schraube (321) durch die zweite Öffnung (32) zum Sperren an der ersten Öffnung (314) der Verlängerung (313) der Drehstange (31) eingeführt wird, so dass die erste Stange (30) und die Verlängerung (313) der Drehstange (31) axial gekuppelt sind, so dass die erste Stange (30) nach innen und oben bewegt wird, wobei die erste Stange (30) einen ersten Hebel (422) enthält, der in der ersten Stange (30) angeordnet ist, und die erste Stange (30) ebenfalls einen Stift (33) umfasst, der in der dritten Öffnung (34) zum Positionieren des ersten Hebels (422) eingeführt wird, so dass die erste Stange nach innen bewegt wird, um das Fahrrad zu bremsen, oder nach oben bewegt wird, um den ersten Hebel (422) zu bewegen, wobei am Fahrrad heruntergeschaltet wird,
der Schaltmechanismus (40) die erste Spindel (401), eine dritte Schraube (403), ein erstes Zahnglied (41), einen ersten Ständer (421), einen ersten Halter (42), den ersten Hebel (422), einen zweiten Halter (43), einen zweiten Hebel (431), ein Betätigungsglied (429), ein zweites Zahnglied (44), ein drittes Zahnglied (45), den ersten Haken (453), das erste Befestigungsteil (46), ein Festlegungsglied (47), einen dritten Hebel (471), ein viertes Zahnglied (48) und die erste Aufnahme (49) umfasst;
das erste Zahnglied (41) eine ovale erste Bohrung (411) enthält, die an einem zentralen Teil hiervon angeordnet ist, das zweite Zahnglied (44) eine ovale zweite Bohrung (441) enthält, das dritte Zahnglied (45) eine ovale dritte Bohrung (451) enthält, die an einem zentralen Teil hiervon befestigt ist, das vierte Zahnglied (48) eine ovale vierte Bohrung (481) enthält, die an einem zentralen Teil hiervon ausgebildet ist, und die erste Aufnahme (49) eine ovale fünfte Bohrung (491) enthält, die an einem zentralen Teil hiervon angeordnet ist, die erste Spindel (401) eine ovale erste Säule (402) umfasst, wobei, wenn die erste Spindel (401) durch Verwendung des dritten Hebels (471) und des ersten Hebels (422) zum Drehen betätigt wird, das erste Zahnglied (41), das zweite Zahnglied (44), das dritte Zahnglied (45), das vierte Zahnglied (48) und die erste Aufnahme (49) gleichzeitig aufgerollt oder freigegeben werden, und anschließend das Seil (91) von der ersten Aufnahme (49) aufgerollt oder freigegeben wird, um in einem Schaltverfahren in mehreren Abschnitten herauf oder herunter zu schalten;
der erste Haken (453) durch die erste Rückholfeder (28) zusammengedrückt wird, um mit dem dritten Zahnglied (45) zurückgehalten zu werden, so dass der Schaltmechanismus (40) blockiert ist.

2. Schalthebel nach Anspruch 1, wobei, wenn der dritte Hebel (471) betätigt wird, das Festlegungsglied (47) so gerollt wird, dass eine Aussparung (474) den dritten Ständer des ersten Hakens (453) anhebt, so dass der erste Haken (453) gedreht wird, und ein erstes Befestigungsende (454) aus einer dritten Klinke (452) des dritten Zahnglieds (45) ausrückt; ein erstes Drückteil (4711) des dritten Hebels (471) das vierte Zahnglied (48) drückt, um im Uhrzeigersinn zu rollen, so dass das erste Zahnglied (41), das zweite Zahnglied (44), das dritte Zahnglied (45), das vierte Zahnglied (48), die erste Bohrung (411) die zweite Bohrung (441), die dritte Bohrung (451), die vierte Bohrung (481) und die fünfte Bohrung (491) der ersten Aufnahme (49) im Uhrzeigersinn mit der ersten Säule (402) der ersten Spindel (401) gerollt werden, und die erste Aufnahme (49) ebenfalls im Uhrzeigersinn rollt, um das Seil (91) zu ziehen (91), um zum hinteren Schaltwerk zu bewegen, so dass sich das hintere Schaltwerk zum Hochschalten zwischen einer ersten, einer zweiten und einer dritten Stufe bewegt.

3. Schalthebel nach Anspruch 1, wobei, wenn der zweite Hebel (431) bewegt wird, sich der zweite Halter (43) entlang der ersten Spindel (401) entgegen dem Uhrzeigersinn dreht, so dass das Betätigungsglied (429) durch die erste Rückholfeder (28) gedrückt wird, um sich entlang einer vierten Öffnung (4291) zu drehen, so dass ein zweiter Ständer (455) angehoben wird, um den ersten Haken (453) weiter anzuheben, so dass ein erstes Befestigungsende (454) des ersten Hakens (453) eine dritte Klinke (452) des dritten Zahnglieds (45) freigibt, und anschließend das Betätigungsglied (429) durch die erste Rückholfeder (28) gedrückt wird, ein Stoppteil (4292) des Betätigungsglieds (429) mit dem ersten Hebel (422) des zweiten Zahnglieds (44) zurückgehalten wird, so dass, wenn das zweite Zahnglied (44) rollt, nur ein erster Hebel (422) freigegeben wird, wodurch die erste Säule (402) der ersten Spindel (401) auf einer kürzeren Distanz rollt, und das Seil (91) durch die erste Aufnahme (49) gezogen wird, um mit dem hinteren Schaltwerk zu koppeln, so dass sich das hintere Schaltwerk verschiebt, um den ersten Hebel (422) zum Rückwärtsbewegen in nur einer Stufe zu betätigen.

4. Schalthebel nach Anspruch 1, wobei das erste Befestigungsteil (46) einen Sektorenschlitz (463) der ersten Nut (493) enthält, so dass, wenn die erste Positionierstütze (25) freigegeben wird, der Schaltmechanismus (400) rollt, um ein Geräusch zu erzeugen.

5. Schalthebel nach Anspruch 1, wobei, wenn der zweite Hebel (431) bewegt wird, sich der zweite Halter (43) entlang der ersten Spindel (401) entgegen dem Uhrzeigersinn dreht, so dass das Betätigungsglied (429) durch die erste Rückholfeder (28) gedrückt wird, um sich entlang einer vierten Öffnung (4291) zu drehen, so dass ein zweiter Ständer (455) angehoben wird, um den ersten Haken (453) weiter anzuheben, so dass ein erstes Befestigungsende (454) des ersten Hakens (453) eine dritte Klinke (452) des dritten Zahnglieds (45) freigibt, und anschließend das Betätigungsglied (429) durch die erste Rückholfeder (28) gedrückt wird, ein Stoppteil (4292) des Betätigungsglieds (429) mit dem ersten Hebel (422) des zweiten Zahnglieds (44) zurückgehalten wird, so dass, wenn das zweite Zahnglied (44) rollt, nur ein erster Hebel (422) freigegeben wird, wodurch die erste Säule (402) der ersten Spindel (401) auf einer kürzeren Distanz rollt, und das Seil (91) durch die erste Aufnahme (49) gezogen wird, um mit dem hinteren Schaltwerk zu koppeln, so dass sich das hintere Schaltwerk verschiebt, um den ersten Hebel (422) zum Rückwärtsbewegen in nur einer Stufe zu betätigen.

## Revendications

1. Sélecteur de vitesse apte à être fixé sur une poignée (90) d'une bicyclette et apte à être connecté avec un changeur de vitesse arrière au moyen d'un câble (91) et comprenant :
- un corps (20), une première barre (30), et un mécanisme de changement de vitesse (40), le corps (20) comprenant un côté couplé axialement avec la première barre (30), une chambre (21) formée sur une extrémité inférieure de celui-ci pour recevoir le mécanisme de changement de vitesse (40), et **caractérisé par** deux languettes (22) disposées sur deux côtés de l'extrémité inférieure de celui-ci respectivement, et chaque languette (22) comprenant un premier trou (221), et dans lequel
- le corps (20) comprend un première ouverture (23) agencée sur une extrémité supérieure de celui-ci et communiquant avec la chambre (21) pour insérer le câble (91) dans la chambre (21) par l'intermédiaire de la première ouverture (23) de façon à se connecter avec un premier siège (49), une première bague de retenue (24) fixée sur un côté de celui-ci pour positionner le corps (20) sur la poignée (90), la chambre (21) comprend une première colonne de positionnement (25), un arbre axial (26), une seconde ouverture (27) et un premier ressort de rappel (28), qui sont tous disposés sur une paroi interne de la chambre (21), la première colonne de positionnement (25) étant destinée à fixer une première pièce de fixation (46) dans la chambre (21), et l'arbre axial (26) étant utilisé pour positionner axialement un premier crochet (453) dans la chambre (21) ;
dans lequel la seconde ouverture (27) comprend une première bille (271) et un premier ressort (272) et le premier siège (49) comprend un nombre de premières rainures (493) agencées sur une surface latérale de celui-ci pour correspondre à la première bille (271) et au premier ressort (272) de telle sorte que lorsque le premier siège (49) roule ou libère le câble (91), un son est émis, le corps (20) comprend également deux seconds trous (29) disposés sur deux côtés de celui-ci de manière individuelle et communiquant avec la chambre (21) pour insérer une première broche (401) de telle sorte que le mécanisme de changement de vitesse (40) est fixé dans la chambre (21) ; entre les deux languettes (22) est fixée de manière axiale une tige rotative en T (31), et la tige rotative (31) comprend une cheville latérale (311) disposée sur un côté supérieur de celle-ci, et la cheville latérale (311) comprend deux troisièmes trous (312) formés sur deux côtés de celle-ci respectivement, une extension (313) et une première ouverture (314), les deux étant disposées sur un côté avant de la cheville latérale (311), une première vis (222) étant insérée dans le premier trou (221) de la languette (22) et le troisième trou (312) de la tige rotative (31), et la tige rotative (31) étant fixée de manière axiale entre les languettes (22) ;
la première barre (30) comprend une deuxième ouverture (32) fixée sur une extrémité supérieure de celle-ci et une troisième ouverture (34) fixée sur une section médiane de celle-ci, une seconde vis (321) étant insérée à travers la deuxième ouverture (32) pour être verrouillée sur la première ouverture (314) de l'extension (313) de la tige rotative (31) de telle sorte que la première barre (30) et l'extension (313) de la tige rotative (31) sont couplées axialement, de telle sorte que la première barre (30) est déplacée vers l'intérieur et vers le haut, la première barre (30) comprenant un premier levier (422) agencé dans la première barre (30), et la première barre (30) comprenant également une broche (33) insérée dans la troisième ouverture (34) pour positionner le premier levier (422) de telle sorte que la première barre est déplacée vers l'intérieur pour freiner la bicyclette ou est déplacée vers le haut pour déplacer le premier levier (422), en descendant une vitesse de la bicyclette ;
le mécanisme de changement de vitesse (40) comprend la première broche (401), une troisième vis (403), un premier élément denté (41), un premier plot (421), un premier support (42), le premier levier (422), un second support (43), un second levier (431), un élément d'actionnement (429), un deuxième élément denté (44), un troisième élément denté (45), le premier crochet (453), la première pièce de fixation (46), un élément de définition (47), un troisième levier (471), un quatrième élément denté (48), et le premier siège (49) ;
le premier élément denté (41) comprenant un premier alésage ovale (411) disposé sur une partie centrale de celui-ci, le deuxième élément denté (44) comprenant un deuxième alésage ovale (441), le troisième élément denté (45) comprend un troisième alésage ovale (451) fixé sur une partie centrale de celui-ci, le quatrième élément denté (48) comprend un quatrième alésage ovale (481) formé sur une position centrale de celui-ci, et le premier siège (49) comprend un cinquième alésage ovale (491) agencé sur une position centrale de celui-ci, la première broche (401) comprend une première colonne ovale (402), et à mesure que la première broche (401) est actionnée en rotation par utilisation du troisième levier (471) et du premier levier (422), le premier élément denté (41), le deuxième élément denté (44), le troisième élément denté (45), le quatrième élément denté (48), et le premier siège (49) sont roulés ou libérés simultanément, et le câble (91) est ensuite roulé ou libéré par le premier siège (49) pour changer une vitesse vers le haut ou vers le bas d'une manière de changement de vitesse à sections multiples ;
le premier crochet (453) est pressé par le premier ressort de rappel (28) pour être retenu avec le troisième élément denté (45) de telle sorte que le mécanisme de changement de vitesse (40) est fixé.

2. Sélecteur de vitesse selon la revendication 1, dans lequel lorsque le troisième levier (471) est actionné, l'élément de définition (47) est tourné de telle sorte qu'un renfoncement (474) élève le troisième plot du premier crochet (453), de telle sorte que le premier crochet (453) est pivoté, et une première queue de fixation (454) se désengage d'un troisième cliquet (452) du troisième élément denté (45) ; une première partie de poussée (4711) du troisième levier (471) pousse le quatrième élément denté (48) pour tourner dans une direction dans le sens des aiguilles d'une montre de telle sorte que le premier élément denté (41), le second élément denté (44), le troisième élément denté (45), le quatrième élément denté (48), le premier alésage (411), le deuxième alésage (441), le troisième alésage (451), le quatrième alésage (481), et le cinquième alésage (491) du premier siège (49) sont tournés dans la direction du sens des aiguilles d'une montre avec la première colonne (402) de la première broche (401), et le premier siège (49) pivote dans la direction du sens des aiguilles d'une montre de façon à tirer le câble (91) afin qu'il se déplace en direction du changeur de vitesse arrière de telle sorte que le changeur de vitesse arrière se déplace pour accélérer la vitesse parmi un premier, un deuxième et un troisième niveau.

3. Sélecteur de vitesse selon la revendication 1, dans lequel lorsque le deuxième levier (431) est déplacé, le second support (43) tourne le long de la première broche (401) dans la direction du sens inverse des aiguilles d'une montre de telle sorte que l'élément d'actionnement (429) est pressé par le premier ressort de rappel (28) pour tourner le long d'un quatrième orifice (4291), de telle sorte qu'un second plot (455) est élevé pour élever davantage le premier crochet (453) de telle sorte qu'une première queue de fixation (454) du premier crochet (453) libère un troisième cliquet (452) du troisième élément denté (45), et l'élément d'actionnement (429) est ensuite pressé par le premier ressort de rappel (28), une partie de butée (4292) de l'élément d'actionnement (429) est retenue avec le premier levier (422) du deuxième élément denté (44) de telle sorte que lorsque le deuxième élément denté (44) tourne, uniquement un premier levier (422) est libéré, ainsi la première colonne (402) de la première broche (401) tourne selon une distance plus faible, et le câble (91) est tiré par le premier siège (49) pour se coupler avec le changeur de vitesse arrière de telle sorte que le changeur de vitesse arrière se déplace pour actionner le premier levier (422) afin qu'il se déplace vers l'arrière selon uniquement un niveau.

4. Sélecteur de vitesse selon la revendication 1, dans lequel la première pièce de fixation (46) comprend une fente de secteur (493) de la première rainure (493) de telle sorte que lorsque la première colonne de positionnement (25) est libérée, le mécanisme de changement de vitesse (40) tourne pour créer un son.

5. Sélecteur de vitesse selon la revendication 1, dans lequel lorsque le second levier (431) est déplacé, le second support (43) pivote le long de la première broche (401) dans la direction du sens inverse des aiguilles d'une montre de telle sorte que l'élément d'actionnement (429) est pressé par le premier ressort de rappel (28) pour pivoter le long d'un quatrième orifice (4291), de telle sorte qu'un second plot (455) est élevé pour élever davantage le premier crochet (453) de telle sorte qu'une première queue de fixation (454) du premier crochet (453) libère un troisième cliquet (452) du troisième élément denté (45), et l'élément d'actionnement (429) est ensuite pressé par le premier ressort de rappel (28), une partie de butée (4292) de l'élément d'actionnement (429) est retenue avec le premier levier (422) du second élément denté (44) de telle sorte que lorsque le second élément denté (44) pivote, uniquement un premier levier (422) est libéré, ainsi la première colonne (422) de la première broche (401) pivote selon une distance plus faible, et le câble (91) est tiré par le premier siège (49) pour se coupler avec le changeur de vitesse arrière de telle sorte que le changeur de vitesse arrière se déplace pour actionner le premier levier (422) afin de se déplacer vers l'arrière selon uniquement un niveau.
